# EUROPÄISCHE PATENTSCHRIFT

(11) **EP 2 331 400 B1**
(45) Veröffentlichungstag und Bekanntmachung des Hinweises auf die Patenterteilung: **14.03.2012**
(21) Anmeldenummer: 09764697.0
(22) Anmeldetag: 26.08.2009
(51) Int. Cl.: B64C 9/32

(54) **LUFTBREMSE FÜR FLUGZEUGE**
AIR BRAKE FOR AIRCRAFT
AÉROFREIN POUR AÉRONEFS

(30) Priorität: 28.08.2008 DE 102008044677
(43) Veröffentlichungstag der Anmeldung: 15.06.2011
(73) Patentinhaber: EADS Deutschland GmbH, 85521 Ottobrunn (DE)
(72) Erfinder: HERRMANN, Otfrid, 79211 Denzlingen (DE)
(74) Vertreter: Avenhaus, Beate
(86) Internationale Anmeldenummer: PCT/DE2009/001196
(87) Internationale Veröffentlichungsnummer: WO 2010/022710

(56) Entgegenhaltungen:
- EP-A2- 1 008 515
- DE-A1- 2 215 032
- GB-A- 2 051 706
- BREITSAMTER C: "Airbrake induced fin buffet loads on fighter aircraft" ICAS 2006, 25TH INTERNATIONAL CONGRESS OF THE AERONAUTICAL SCIENCE,, 1. Januar 2006 (2006-01-01), Seiten 1-11, XP009112042

## Beschreibung

Die Erfindung betrifft eine Luftbremse für Flugzeuge gemäß dem Oberbegriff des Patentanspruchs 1.

Eine Luftbremse (engl. speed brake) ist eine in den Luftstrom ausfahrbare Klappe an einem Fahrzeug, die den Strömungswiderstand der Luft erhöht und somit als Bremse dient. Die von einer Luftbremse bewirkte Widerstandserhöhung kann durch Vergrö-βern der Stirnfläche oder durch Erhöhen des cw-Wertes erfolgen. Hierdurch wird der induzierte Widerstand vergrößert. Da hinter den Luftbremsen die laminare Strömung an der Tragfläche abreißt, verringert sich zudem der Auftrieb.

Luftbremsen werden bei Flugzeugen eingesetzt, um die Fluggeschwindigkeit zu verringern (bei höherem Anstellwinkel), die Sinkgeschwindigkeit .zu erhöhen oder um die Ausrollstrecke bei der Landung zu verringern, siehe das Dokument XP009112042. Luftbremse auch für taktische Manöver (z. B. Kobramanöver) angewendet oder um die Geschwindigkeit im Sturzflug zu verringern (Sturzflugbremse).

Die Bremsklappen werden bei Flugzeugen entweder mechanisch oder hydraulisch aus der Ober- oder Unterseite der Tragfächen, auch beidseitig, ausgefahren. Besonders bei Kampfflugzeugen kommen auch Bremsklappen vor, die aus dem Rumpfboden oder aus den Rumpfseitenwänden ausgefahren werden. Die Klappe selbst ist meist gewölbt und der Rumpfkontur angepasst.

Aus EP 1 008 515 A2 ist eine Luftbremse in Form einer in den Luftstrom ausfahrbaren Klappe zur Erhöhung des Strömungswiderstandes der Luft bekannt, wobei an der entgegen der Flugrichtung gesehenen hinteren Kante der Luftbremse ein aufgebautes Bauelement angeordnet ist, welches während des Lande- oder Startmanövers bei ausgefahrenen Landeklappen im aufgeklappten Zustand der Luftbremse den zwischen der hinteren Kante der Luftbremse und der Oberfläche der Landeklappe gebildeten Spalt verringert und welches bei eingefahrener Landeklappe und eingeklapptem der Luftbremse während des Reisefluges an der Oberfläche der Landeklappe anliegt.

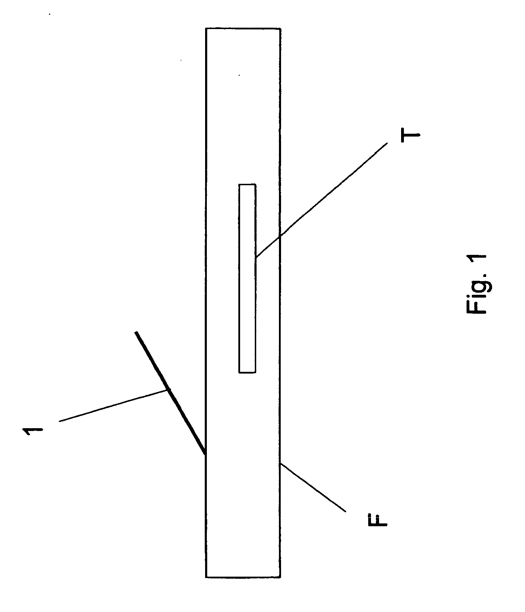

Fig. 1 zeigt schematisch ein Militärflugzeug F in Seitenansicht. Im Bereich der Tragfläche T befindet sich eine Luftbremse in Form einer ausfahrbaren Klappe 1. Im eingefahrenen Zustand passt sich die Klappe 1 der Außenkontur des Flugzeugs F an.

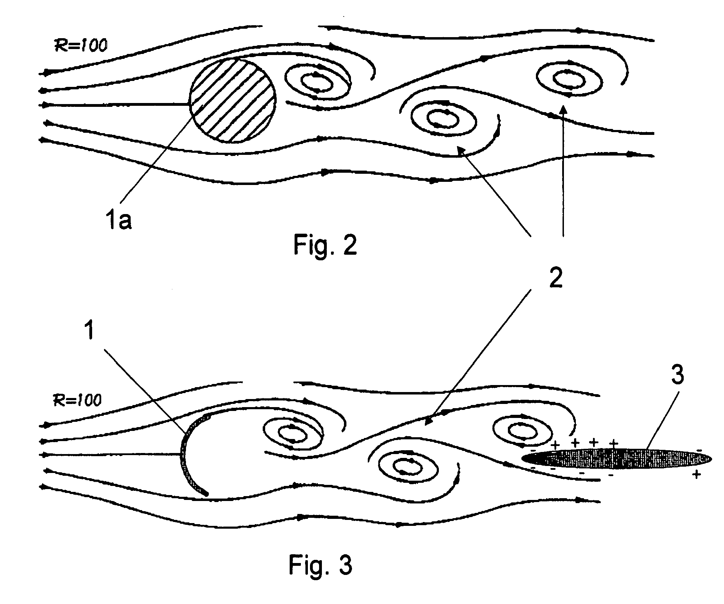

Problematisch ist, dass sich hinter der Bremsklappe starke Luftwirbel ausbilden, auch bekannt als Karmansche Wirbelstrasse (Fig. 2). Hinter dem quer zur Strömung liegenden Zylinder 1a sind die entgegengesetzt drehenden Wirbel 2 zu erkennen, die abwechselnd von der einen und der anderen Seite des Körpers 1a abgehen. Ähnlich verhält sich die Strömung hinter der Luftbremse 1, wie sie schematisch in Fig. 3 dargestellt ist.
Diese Wirbel 2 führen zu Druckschwankungen (-schwingungen), die sowohl die Luftbremse selbst, aber auch vor allen dahinterliegende Flächen des Flugzeugs zum Schwingen bringen und so deren Haltbarkeit stark reduzieren oder sogar in kurzer Zeit zerstören können, wenn die schmalbandige Druckschwingung mit dem Bauteil in Resonanz kommt. Schematisch ist in Fig. 3 diese alternierende Druckbeaufschlagung in Bild 3 an einem hinter der Luftbremse 1 befindlichem Seitenleitwerk 3 dargestellt.

Aufgabe der Erfindung ist es, eine gattungsgemäße Luftbremse anzugeben, mit welcher solche Druckschwankungen reduziert bzw. verhindert werden können.

Diese Aufgabe wird gelöst mit der Luftbremse gemäß den Merkmalen des Anspruchs 1. Vorteilhafte Ausführungen der Erfindung sind Gegenstand von Unteransprüchen.

Die erfindungsgemäße Luftbremse für Flugzeuge in Form einer in den Luftstrom ausfahrbaren Klappe zur Erhöhung des Strömungswiderstandes der Luft, zeichnet sich dadurch aus, dass auf der im eingefahrenen Zustand der Strömung Zugewandten Seite der Klappe einseitig an einer der beiden Kanten der Klappe, welche parallel zur Strömungsrichtung sind, ein Aufsatz angebracht ist, wobei sich der Aufsatz im eingefahrenen Zustand der Klappe entlang der Strömungsrichtung der Luft.

Im ausgefahrenen Zustand verändert der erfindungsgemäße Aufsatz die Abströmung der Wirbel einseitig und verhindert so den symmetrischen und abwechselnden Abgang gleich großer Wirbel. Dies reduziert die Amplitude der Druckschwankungen hinter der Klappe und verringert die Resonanzgefahr. Grundgedanke der Erfindung ist daher, die Klappe an ihrer der Strömung zugewandten Seite derart zu verändern, dass die Luftströmung über die Klappe nicht mehr symmetrisch wie beim Stand der Technik verläuft, sondern asymmetrisch, wodurch der gewünschte Effekt einer asymmetrischen Ablösung von Wirbeln hinter der Klappe erreicht wird.

Die aus dem Stand der Technik bekannte negative Auswirkung der Luftbremse wird mit der Erfindung reduziert, so dass die Haltbarkeit von dahinter liegenden. Flugzeugbauteilen verbessert wird und die Luftbremse unter einem größeren Winkel zur Strömung ausgeschlagen werden kann. Durch den erfindungsgemäßen Aufsatz wird weder die Flugleistung noch die Festigkeit der Luftbremse beeinflusst.

Die Erfindung sowie vorteilhafte Ausführungen werden anhand von Figuren näher erläutert. Es zeigen:
Fig. 1 eine schematische Darstellung eines Flugzeugs mit Luftbremse in Seitenansicht,
Fig. 2 schematische Darstellung der Wirbelbildung einer Strömung hinter einem Zylinder,
Fig. 3 schematische Darstellung der Wirbelbildung einer Strömung hinter einer Luftbremse,
Fig. 4 erste Ausführung einer erfindungsgemäßen Luftbremse,
Fig. 5 zweite Ausführung einer erfindungsgemäßen Luftbremse,
Fig. 6 dritte Ausführung einer erfindungsgemäßen Luftbremse,
Fig. 7 vierte Ausführung einer erfindungsgemäßen Luftbremse,

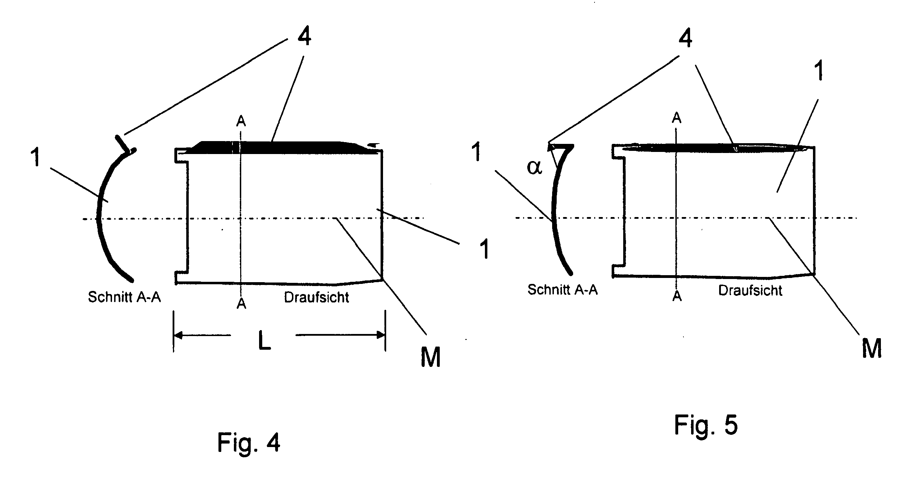

Fig. 4 zeigt eine erste Ausführungsform einer erfinderischen Luftbremse. Die Darstellung zeigt auf der rechten Seite eine Luftbremse 1 in Draufsicht und auf der linken Seite die Luftbremse 1 im Schnitt A-A. Auf der Oberseite der Luftbremse 1 ist der erfindungsgemäße Aufsatz 4 einseitig zur Mittellinie M angeordnet. In dieser Ausführungsform ist der Aufsatz 4 ein Steg, welcher auch als Rippe oder Zaun bezeichnet werden kann. Der Aufsatz 4 kann sich über die gesamte Länge L der Luftbremse 1 erstrecken. Der Aufsatz 4 kann ferner durchgängig ausgeführt sein oder Unterbrechungen aufweisen. In Fig. 4 ist der Aufsatz 4 parallel zur Flächennormalen auf der Luftbremse angeordnet.

In Fig. 5 ist in einer zweiten Ausführungsform einer erfinderischen Luftbremse der Aufsatz 4 unter einem Winkel □, mit □ kleiner 90° zur Oberfläche der Luftbremse 1 angeordnet.

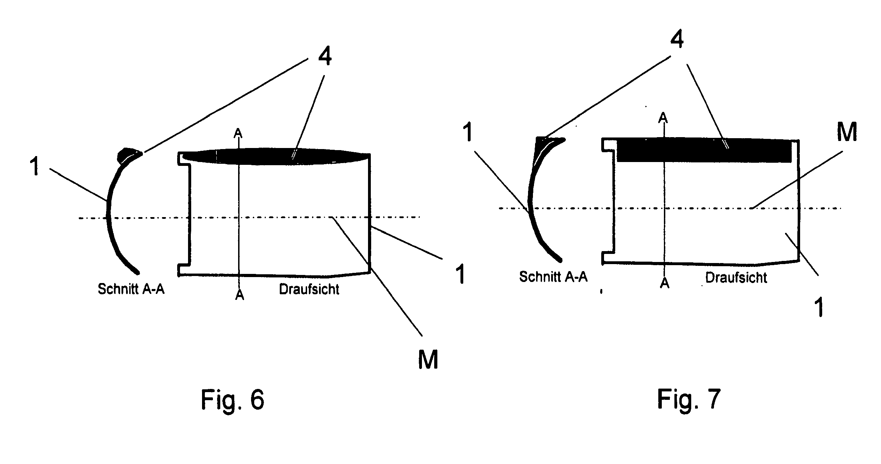

In Fig. 6 ist der Aufsatz 4 in einer dritten Ausführungsform einer erfinderischen Luftbremse als ein längsförmiger Wulst ausgeführt.

In Fig. 7 ist der Aufsatz 4 in einer dritten Ausführungsform einer erfinderischen Luftbremse als einseitig zur Mittellinie M ausgeführte Aufdickung des Profils der Luftbremse ausgeführt. Dadurch wird dem Profil der Luftbremse 1 eine asymmetrische Form aufgeprägt, wodurch die Luftströmung nicht mehr symmetrisch um die Luftbremse 1 strömen kann, was dazu führt, dass sich hinter der Luftbremse 1 keine gegenläufigen Wirbel mehr bilden können wie in Fig. 2 und 3 gezeigt.

## Patentansprüche

1. Luftbremse für Flugzeuge in Form einer in den Luftstrom ausfahrbaren Klappe (1) zur Erhöhung des Strömungswiderstandes der Luft,
**dadurch gekennzeichnet, dass** auf der im eingefahrenen Zustand der Strömung Zugewandten Seite der Klappe (1) einseitig
an einer der beiden Kanten der Klappe (1), welche parallel zur Strömungsrichtung sind, ein Aufsatz (4) angebracht ist, wobei sich der Aufsatz (4) im eingefahrenen Zustand der Klappe (1) entlang der Strömungsrichtung der Luft erstreckt.

2. Luftbremse nach Anspruch 1,
**dadurch gekennzeichnet, dass**
der Aufsatz (4) ein Längssteg oder ein längsförmiger Wulst ist.

3. Luftbremse nach Anspruch 1,
**dadurch gekennzeichnet, dass**
der Aufsatz (4) eine Profilaufdickung der Klappe (1) darstellt.

## Claims

1. Air brake for aircraft, in the form of a flap (1) which can be extended into the air stream in order to increase the aerodynamic drag of the air, **characterized in that**, on that side of the flap (1) which, in the retracted state, faces the flow, a cover (4) is attached on one side to one of the two edges of the flap (1), which edges are parallel to the direction of flow, the cap (4) extending along the direction of flow of the air in the retracted state of the flap (1).

2. Air brake according to Claim 1, **characterized in that** the cover (4) is a longitudinal web or a longitudinally shaped bead.

3. Air brake according to Claim 1, **characterized in that** the cover (4) constitutes a thickening of the profile of the flap (1).

## Revendications

1. Aérofrein pour aéronefs sous la forme d'un volet (1) pouvant être sorti dans le flux d'air pour augmenter la traînée,
**caractérisé en ce que** du côté du volet (1) tourné vers l'écoulement dans l'état rentré, d'un côté sur l'une des deux arêtes du volet (1), qui sont parallèles à la direction d'écoulement, est montée une garniture (4), la garniture (4) s'étendant dans l'état rentré du volet (1) le long de la direction de l'écoulement de l'air.

2. Aérofrein selon la revendication 1,
**caractérisé en ce que**
la garniture (4) est une nervure longitudinale ou un bourrelet de forme allongée.

3. Aérofrein selon la revendication 1,
**caractérisé en ce que**
la garniture (4) constitue un épaississement du profil du volet (1).
